# EUROPÄISCHE PATENTSCHRIFT

(11) **EP 3 057 307 B1**
(45) Veröffentlichungstag und Bekanntmachung des Hinweises auf die Patenterteilung: **17.01.2018**
(21) Anmeldenummer: 16155613.9
(22) Anmeldetag: 15.02.2016
(51) Int. Cl.: H04N 5/225, G03B 17/02

(54) **BEFESTIGUNGSVORRICHTUNG FÜR EINE KAMERA UND KAMERA**
CAMERA ATTACHING DEVICE AND CAMERA
DISPOSITIF DE FIXATION D'UNE CAMERA ET CAMERA

(30) Priorität: 16.02.2015 DE 102015202774
(43) Veröffentlichungstag der Anmeldung: 17.08.2016
(73) Patentinhaber: DResearch Fahrzeugelektronik GmbH, 10319 Berlin (DE)
(72) Erfinder: Weber, Michael, 12683 Berlin (DE)
(74) Vertreter: Gulde & Partner

(56) Entgegenhaltungen:
- US-A1- 2009 161 240
- US-A1- 2009 196 597
- US-A1- 2009 322 278
- US-A1- 2014 354 836

## Beschreibung

Die Erfindung betrifft eine Befestigungsvorrichtung für eine Kamera sowie eine Kamera.

Kameras, wie Überwachungskameras, die beispielsweise im öffentlichen Personennahverkehr eingesetzt werden, erlauben oftmals eine Einstellung der Blick- oder Überwachungsrichtung. So ermöglicht eine zu einer Montagefläche der Kamera senkrechte Drehachse die Einstellung der Blickrichtung in einer Dimension. Dabei erfolgt diese Einstellung in der Regel durch ein geeignetes Positionieren der Bohrungen für die Befestigungsschrauben im Zusammenspiel mit konzentrischen Langlöchern. Eine weitere Drehachse verläuft zumeist parallel zur Montagefläche und wird durch eine drehbare Befestigung der Kamera bzw. des Kamerasensors in einer Gabel realisiert.

In der dritten Dimension existiert keine Einstellmöglichkeit, so dass z. B. bei einer Montage einer Dom-Kamera an einer geneigten Decke nur in zwei entgegengesetzten Blickrichtungen eine parallele Ausrichtung der Kamera zum Boden möglich ist. Die Ausrichtung der Kamera bezogen auf die Drehachse senkrecht zur Montagefläche ist nach erfolgter Bohrung der Befestigungslöcher nur noch sehr eingeschränkt möglich. So ist dies bei symmetrischer Anordnung von n Befestigungslöchern um einen Mittelpunkt in Schritten von 360°: n, sowie jeweils zusätzlich um den Freiheitsgrad, den die Langlöcher bieten, möglich. Die Sicherung der gewählten Ausrichtung erfolgt durch Festziehen von Schrauben und Muttern und ist umständlich, zeitaufwändig und relativ ungenau.

US 2014/354836 A1 offenbart eine Befestigungsvorrichtung für eine Kamera mit einem Grundträger mit einer kugelabschnittförmigen Aufnahmefläche und eine an der Aufnahmefläche anliegenden kugelförmigen Kameraaufnahme. Die Kameraaufnahme weist einen Hohlraum zur Aufnahme der Kamera und eine Objektivöffnung auf. Hierbei kann die Kameraaufnahme oder der Grundträger ein magnetisches Material aufweisen.

Der Erfindung liegt nun die Aufgabe zugrunde, die Befestigung einer Kamera zu verbessern.

Diese Aufgabe wird gelöst mit den Merkmalen des Anspruchs 1. Im Kontext dieser Anmeldung werden unter anderem die folgenden Begriffe verwendet, die zuvor kurz erläutert werden.

Hartmagnetische Materialien: erfordern für ihre Magnetisierung starke äußere Magnetfelder und behalten ihre Magnetisierung auch nach Wegfall eines äußeren Magnetfeldes bei.

Weichmagnetische Materialien: werden selbst durch schwache äußere Magnetfelder magnetisiert. Diese Magnetisierung verschwindet nach Entfernung des äußeren Magnetfeldes sofort wieder.

Zwischen hart- und weichmagnetischen Körpern baut sich bei Annäherung eine anziehende Kraft auf.

Kugelabschnitt: ist der Teil einer Kugeloberfläche, der bei einem Schnitt der Kugel mit einer Ebene komplett auf einer Seite der Schnittebene liegt.

Hüllkugel eines Körpers: ist die kleinste Kugel, die den Körper vollständig umschließt oder enthält.

Eine zulässige Aufnahme der Güte d (Längenmaß) für einen Körper: jeder Kugelabschnitt der Hüllkugel des Körpers, der den Körper bei jeder Drehung um den Mittelpunkt der Hüllkugel an mindestens drei verschiedenen, nicht auf einer Gerade liegenden Raumpunkten berührt, wobei der Innenkreis des durch die drei Punkte gebildeten Dreiecks mindestens den Durchmesser d besitzt.

Kamera-Kopf oder Kameraaufnahme: ist die bewegliche Einheit einer Kamera, die wenigstens das Kamera-Objektiv und den Sensor umfasst (aber auch die gesamte Kamera-Elektronik enthalten kann) einschließlich eines eventuell vorhandenen Gehäuses.

Die erfindungsgemäße Befestigungsvorrichtung für eine Kamera umfasst einen Grundträger mit einer kugelabschnittförmigen Aufnahmefläche und eine an der Aufnahmefläche anliegenden kugelförmigen Kameraaufnahme, wobei die Kameraaufnahme einen Hohlraum zur Aufnahme der Kamera und eine Objektivöffnung aufweist und wobei entweder die Kameraaufnahme oder der Grundträger ein hartmagnetisches Material aufweist, wobei das jeweils andere Element ein weichmagnetisches Material aufweist und der Hohlraum in einem ersten Halbkugelbereich der Kameraaufnahme angeordnet ist und wobei in einem zweiten Halbkugelbereich der Kameraaufnahme konzentrische Ausnehmungen für Kabel der Kamera vorgesehen sind, wobei die Ausnehmungen sich ausgehend von dem ersten Halbkugelbereich bis zu einem Pol der Kameraaufnahme erstrecken. Eine derartige Erstreckung erlaubt für maximale Verstellwinkel über einen halbkreisförmigen Bereich die Führung der Kabel in den Ausnehmungen.

Die Kameraaufnahme kann eine Kugel im mathematischen Sinne sein. Sie kann aber auch eine z. B. an zwei gegenüberliegenden Polen abgeflachte Kugelform aufweisen. Einer dieser Pole umfasst die Objektivöffnung, während der andere Pol für die Durchführung von Kabeln der Kamera ausgebildet sein kann. Als Kamera kann zum einen die gesamte zu montierende Einheit von Befestigungsvorrichtung und Kamerasensor bezeichnet werden. Andererseits kann auch der in der Befestigungsvorrichtung befestigte Kamerasensor als Kamera bezeichnet werden.

Die erfindungsgemäße Befestigungsvorrichtung für eine Kamera hat den Vorteil, dass die kugelförmige Kameraaufnahme und damit eine Kamera wahlfrei in allen drei Dimensionen ausgerichtet werden kann. Da die Befestigungsvorrichtung wie ein Kugelgelenk aufgebaut ist, sind sowohl die Ausrichtungen als auch die Montage einfach durchzuführen. Zudem kann die Befestigungsvorrichtung einfach hergestellt werden, da sie relativ wenige, geometrisch einfach aufgebaute Bauteile aufweist. Durch die Kombination von kugelförmiger Kameraaufnahme und einer entsprechenden kugelabschnittförmigen Aufnahmefläche ergibt sich ein sehr großer Verstellbereich der Blickrichtung der Kamera. Dieser Verstellbereich erstreckt sich über eine vollständige Halbkugel.

Dadurch, dass eines der Teile aus magnetischem Material besteht oder dieses aufweist und dass das jeweils andere Teil aus weichmagnetischem Material besteht oder dieses aufweist, bewirkt die zwischen den beiden Teilen wirkende magnetische Kraft, dass die Kameraaufnahme in dem Grundträger fixiert ist. So verbleibt die Kamera bzw. der Kameraträger nach manueller Einstellung, auch bei Vibrationen, in der gewünschten Blickrichtung. Bei hinreichend großer Magnetkraft kann die Aufnahme auch als Kugelabschnitt sehr geringer Höhe gestaltet werden. Es kann vorgesehen sein, dass eine Abdeckung die Kameraaufnahme zusätzlich fixiert, dann kann die magnetische Fixierung als Montagehilfe dienen, bis die Abdeckung befestigt ist und/oder sie kann gemeinsam mit der Haltekraft der Abdeckung die Kameraaufnahme fixieren. Diese Anordnung erübrigt mechanische Maßnahmen zur vorläufigen Fixierung des Kameraträgers nach der Ausrichtung und vor der endgültigen Fixierung. Dadurch kann der Ausrichtvorgang leicht und nahezu uneingeschränkt erfolgen und es entfällt der Arbeitsschritt der Fixierung der gewählten Ausrichtung vor der finalen Montage. Ein weiterer Vorteil der magnetischen Fixierung ist es, dass die mit dem Montage-Ort fest verbundene kugelabschnittförmige Aufnahme des Kameraträgers eine deutlich geringere Höhe als der Kugelradius aufweisen kann, ohne dass es eines Haltebügels bedarf. Die genannten Vorteile gelten für jede auf Haftung basierende Verbindung zwischen Kameraträger und Aufnahme. Die magnetische Haftung ist eine sehr einfach realisierbare Variante mit guten Eigenschaften.

Die Ausnehmungen erlauben eine einfache und kurze Kabelführung durch die Befestigungsvorrichtung. Der zumindest kugel-ähnliche Kamera-Kopf weist, durch einen Großkreis getrennt, zwei unterschiedlich gestaltete Bereiche auf. Der eine, auch vordere, Bereich ist mit Ausnahme einer parallel zum Großkreis verlaufenden kreisförmigen Öffnung für das Objektiv eine Halbkugel. Der andere, auch hintere, Bereich enthält Aussparungen oder Ausnehmungen, die einer flexiblen Kabel-Führung dienen. Vorteilhafte Eigenschaften dieser Anordnung sind, dass bei dieser Gestaltung des Kamera-Kopfes die vordere Halbkugel das Objektiv, den Sensor und optional weitere elektronische Komponenten aufnimmt. Das Kabel, das die Verbindung dieser Funktionsgruppen mit einem übergeordneten System herstellt, tritt im Mittelpunkt des kugelähnlichen Kamera-Kopfes aus der vorderen Halbkugel heraus. Durch die Gestaltung des hinteren Bereichs des Kamera-Kopfes kann dieses Kabel an nahezu jedem Ort dieses Bereichs herausgeführt werden. Dadurch bleibt der Vorteil der weitgehend freien Ausrichtung des Kamera-Kopfes auch unter Berücksichtigung der Kabel-Führung erhalten. Im Detail können Einflussgrößen wie ein großer Durchmesser des Kabels, eine große Breite der Material-Segmente an der Außenseite im hinteren Bereich und/oder ein kleiner Durchmesser der Öffnung für die Durchführung des Kabels in der Aufnahme die freie Ausrichtbarkeit des Kamera-Kopfes beeinflussen.

Vorteilhafterweise ist eine Höhe der kugelabschnittförmigen Aufnahmefläche kleiner als ein Radius der Kameraaufnahme. Vorzugsweise beträgt die Höhe zwischen einem Viertel und der Hälfte des Radius, höchst vorzugsweise ein Drittel. Dieser Aufbau erlaubt wesentlich mehr Freiheiten bei der Ausrichtung des Kameraträgers oder Kamera-Kopfes, weil der Kamera-Kopf vertikal zur Montagefläche in einem Bereich größer als 180° ausgerichtet werden kann. Dies erlaubt sogar, dass sich die Befestigungsfläche der Kamera teilweise im Sichtbereich der Kamera befinden kann.

In weiterer bevorzugter Ausgestaltung der Erfindung ist vorgesehen, dass an dem Grundträger eine transparente, kugelsegmentförmige Abdeckung zur teilweisen Aufnahme der Kameraaufnahme vorgesehen ist. Die Abdeckung dient zum Schutz der Kamera und der Kameraaufnahme und kann zusätzlich die Kameraaufnahme in dem Grundträger fixieren, was sich z. B. für Domkameras, das heißt für an Decken befestigte Kameras eignet.

Die Abdeckung kann mit einem Überwurfring an dem Grundträger befestigt sein. Dies erlaubt eine einfache und sichere Fixierung der Abdeckung und auch der Kameraaufnahme.

Vorzugsweise weist die Aufnahmefläche eine reibungserhöhende Oberfläche auf. Eine derartige Oberfläche mit hohem Reibungskoeffizienten fixiert die Kameraaufnahme in dem Grundträger und stellt sicher, dass eine einmal vorgenommene Ausrichtung der Kameraaufnahme und damit der Kamera auch bei Erschütterungen und Vibrationen erhalten bleibt.

Besonders vorteilhaft ist, dass die Kameraaufnahme aus zwei verbindbaren Halbkugeln besteht. So kann die Kamera bzw. der Sensor und eventuell benötigte Elektronik einfach in den Hohlraum eingesetzt werden.

Die zwei Halbkugeln können identisch ausgestaltet und magnetisiert sein. So wird der kugelähnliche Kamera-Kopf durch das Zusammenfügen von zwei identischen, um 180° gegeneinander gedrehten und geeignet magnetisierten Halbschalen gebildet. Vorteilhafte Eigenschaften dieser Anordnung sind, dass durch den Aufbau des Gehäuses für den Kamera-Kopf aus zwei identischen Halbschalen die Komponentenanzahl reduziert, Werkzeug-und Herstellungskosten gespart sowie die Lagerhaltung vereinfacht werden. Durch eine geeignete Magnetisierung kann darüber hinaus auf eine Verschraubung oder andere ähnliche Verbindungen der beiden Halbschalen miteinander verzichtet werden. Durch die Magnetisierung der Halbschalen werden Zeit und Material bei der Montage eingespart. Zu Zwecken der Ausrichtung der beiden Halbschalen oder Halbkugeln kann die Halbkugel ein Zentrier- oder Rastelement aufweisen. Zum Beispiel kann dies ein Vorsprung und eine korrespondierende Ausnehmung sein, die dann mit dem Vorsprung und der Ausnehmung der anderen Halbschale zusammenwirken.

In bevorzugter Ausgestaltung der Erfindung ist vorgesehen, dass ein Kabelaustrittsbereich für die Kamera in der räumlichen Mitte der kugelförmigen Kameraaufnahme angeordnet ist. Exakter ausgedrückt tritt das Kabel im Mittelpunkt der Hüllkugel der Kameraaufnahme aus. Diese Anordnung bewirkt, dass der Abstand von dem in der Mitte der Kugel liegenden Kabelaustrittsbereich bis zu einem Kabelauslass der Aufnahmefläche stets gleich ist und zwar unabhängig von der Ausrichtung oder Verdrehung der kugelförmigen Kameraaufnahme. Somit kann die Länge der Kamerakabel genau bemessen sein, was Kosten spart. Dadurch, dass das Kabel nur im Mittelpunkt des Kamera-Kopfes mit diesem fest verbunden ist und im hinteren Bereich auf geradem Weg in einer weitgehend beliebigen Richtung nach radial nach außen verlegt werden kann, muss es für die freie Ausrichtung des Kamera-Kopfes keinen Längen-Aufschlag für das Kabel geben. Die theoretische Kabellänge zwischen dem Mittelpunkt des Kamera-Kopfes und der Austrittsöffnung in der Aufnahme des Kamera-Kopfes beträgt exakt r (Radius der Hüllkugel des Kamera-Kopfes). Daraus ergibt sich der Vorteil, dass das Kabel sowohl mit der Aufnahme als auch mit dem Kamera-Kopf fest und bei Bedarf dicht im Sinne verschiedener Schutzgrade so verbunden werden kann, dass eine wahlfreie Ausrichtung des Kamera-Kopfes nach wie vor möglich ist.

Die erfindungsgemäße Kamera mit einem Objektiv umfasst eine Befestigungsvorrichtung wie zuvor beschrieben. Es gelten die gleichen Vorteile und Modifikationen wie zuvor beschrieben. Die Kamera kann ein Kabel zur Datenübertragung aufweisen oder sie kann kabellos ausgeführt sein und die Daten über ein Funkprotokoll übertragen. Die Kamera kann eine Überwachungskamera sein, wie sie z. B. zur Überwachung von Innenräumen in Fahrzeugen des öffentlichen Personennahverkehrs eingesetzt wird. Insbesondere kann die Kamera eine Domkamera zur Decken- oder Wandmontage sein.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Halbkugel einer Kameraaufnahme;
- Figur 2: die Halbkugel mit Kamerasensor;
- Figur 3: die Kameraaufnahme;
- Figur 4: einen Grundträger;
- Figur 5: den Grundträger mit Kameraaufnahme;
- Figur 6: eine Abdeckung;
- Figur 7: die Abdeckung mit Kameraaufnahme;
- Figur 8: die Befestigungsvorrichtung für eine Kamera; und
- Figur 9: einen Querschnitt durch die Befestigungsvorrichtung.

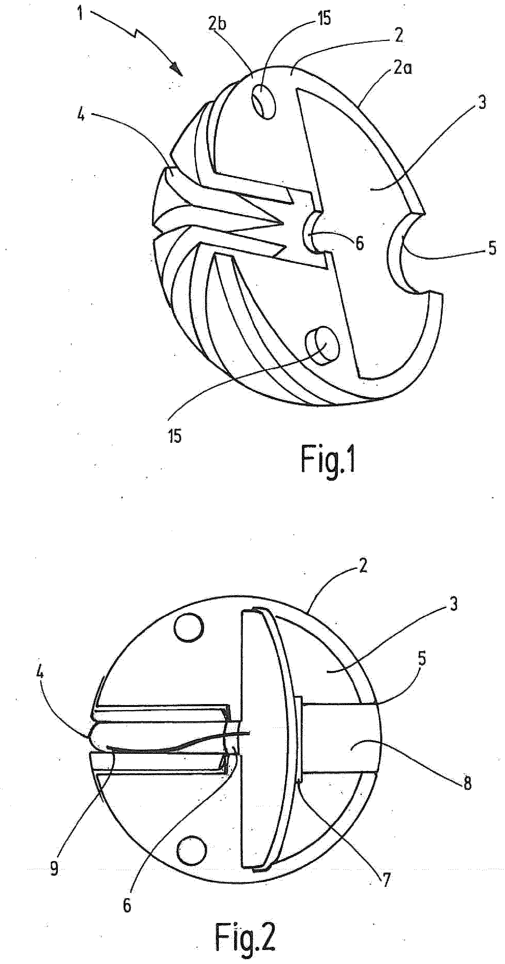

Figur 1 zeigt in räumlicher Darstellung von einer Kameraaufnahme 1 eine erste Halbkugel 2 mit einem Hohlraum 3, der zur Aufnahme einer Kamera bzw. eines Kamerasensors und dazugehöriger Elektronik vorgesehen ist. Der Hohlraum 3 ist in einem ersten Halbkugelbereich 2a ausgebildet. In einem zweiten Halbkugelbereich 2b sind mehrere konzentrische Ausnehmungen 4 zur Durchführung von Kabeln oder eines Kabels des Kamerasensors ausgebildet.

Der Hohlraum 3 ist durch eine Objektivöffnung 5 mit der Außenseite der Kameraaufnahme 1 verbunden. Im Mittelpunkt der kugelförmigen Kameraaufnahme 1 ist eine Kabelöffnung 6 für Kabel des Kamerasensors vorgesehen. Die Kabelöffnung 6 kommuniziert ebenfalls mit dem Hohlraum 3.

Die Ausnehmungen 4 liegen vorzugsweise eng beieinander, so dass zahlreiche Möglichkeiten der Kabelführung gegeben sind. Diese Aussparungen in dem zweiten Halbkugelbereich 2b können beispielsweise durch Subtraktion von identischen Quadern mit mindestens der Dicke der anzuschließenden Kabel von einer vollen Halbkugel erzeugt werden, wenn diese Quader um die Senkrechte durch den Mittelpunkt der den Halbkugelbereich 2b begrenzenden Kreisfläche jeweils um einen Winkel gedreht werden, durch den 360° ganzzahlig teilbar ist.

In Figur 2 ist die Halbkugel 2 mit integriertem Kamerasensor 7 dargestellt. Ein Objektiv 8 des Kamerasensors 7 ist in der Objektivöffnung 5 angeordnet. Weitere optische Elemente und/oder Elektronik können ebenfalls in dem Hohlraum 3 angeordnet sein. Ein Kabel 9 des Kamerasensors 7 ist durch die Kabelöffnung 6 in eine der Ausnehmungen 4 geführt.

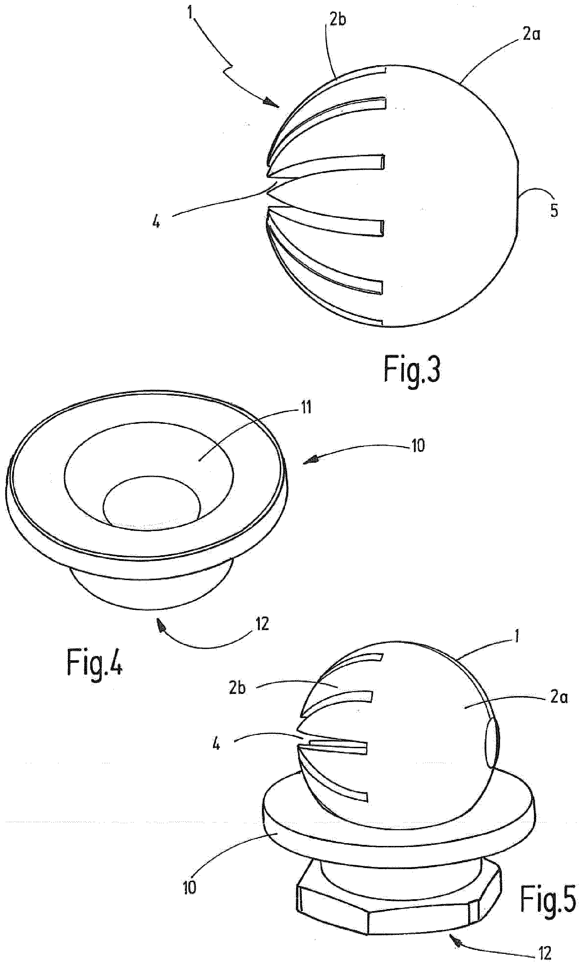

In Figur 3 ist nun die vollständige Kameraaufnahme 1 dargestellt, welche sich aus zwei identischen Halbkugeln 2 zusammensetzt. Die Kameraaufnahme 1 hat eine kugelförmige Gestalt, wobei zwei gegenüberliegende Pole abgeflacht sind. Der erste Pol befindet sich im Bereich der Objektivöffnung 5 und der zweite Pol befindet sich im Schnittpunkt der Ausnehmungen 4. Es ist zu sehen, dass die kugelförmige Kameraaufnahme 1 einen ersten Halbkugelbereich 2a aufweist, in welchem sich der Hohlraum 3 befindet, und einen zweiten Halbkugelbereich 2b aufweist, in dem die konzentrischen Ausnehmungen 4 ausgebildet sind. Jeder der beiden Halbkugelbereiche 2a und 2b wird von beiden Halbkugeln 2 begrenzt.

In Figur 4 ist ein Grundträger 10 zur Aufnahme der Kameraaufnahme 1 dargestellt. Dazu hat der Grundträger 10 eine kugelabschnittförmige Aufnahmefläche 11, beispielsweise in Form einer Kalotte. Der Grundträger 10 ist rotationssymmetrisch ausgebildet. Die kugelabschnittförmige Aufnahmefläche 11 kann insbesondere ringförmig ausgebildet sein. Der Radius oder die Radien der Aufnahmefläche 11 sind derart ausgebildet, dass sie dem Radius der kugelförmigen Kameraaufnahme 1 entsprechen, so dass die Kameraaufnahme 1 drehbar in der Aufnahmefläche 11 gelagert ist. In einem Fußteil des Grundträgers 10 ist eine Kabeldurchführung 12 zur Durchführung des Kabels 9 vorgesehen. An dem Fußteil können Bohrungen zur Befestigung der gesamten Befestigungsvorrichtung an einer Montagefläche vorgesehen sein.

Gemäß Figur 5 ist die Kameraaufnahme 1 in dem Grundträger 10 angeordnet. Durch die Ausnehmungen 4 in dem zweiten Halbkugelbereich 2b können die Anschlusskabel für die Elektronik, die sich in dem Hohlraum 3 in dem ersten Halbkugelbereich 2a befindet, in jeder sinnvollen Ausrichtung der Kameraaufnahme 1 in den Grundträger 10 bis zur Kabeldurchführung 12 in dem Grundträger 10 geführt werden. Mögliche Ausrichtungen der Kameraaufnahme 1 werden so nicht eingeschränkt. Da die Anschlusskabel 9 beginnend mit der Kabelöffnung 6 in dem Mittelpunkt der Kugel der Kameraaufnahme 1 bei jeder Ausrichtung auf geradem Weg zu der Kabeldurchführung 12 des Grundträgers 10 geführt werden können, kann das Kabel 9 nahezu ohne Längenzugabe im Austrittsbereich in dem Grundträger 10 eingegossen werden. Dadurch kann in diesem Bereich eine hohe Dichtigkeit und somit ein hoher Schutzgrad erzielt werden.

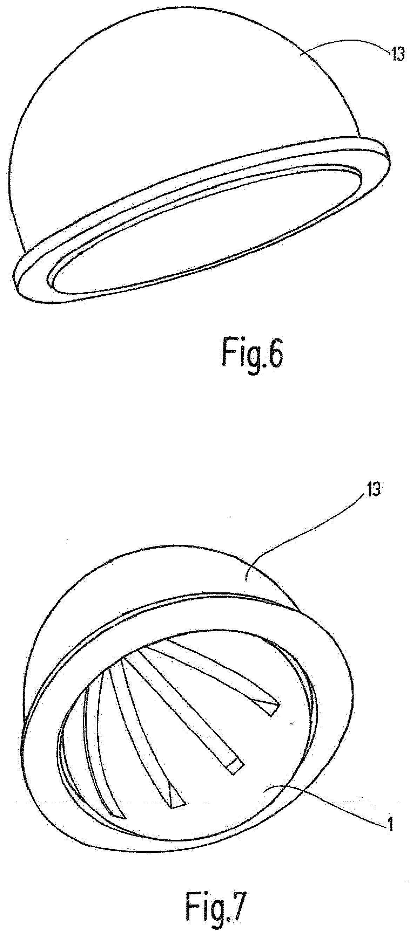

In Figur 6 ist eine transparente, kugelsegmentförmige Abdeckung 13 dargestellt, welche, wie in Figur 7 dargestellt, zur Aufnahme der Kameraaufnahme 1 dient. Die Abdeckung 13 ist vorzugsweise etwa halbkugelförmig und mit ihrem Radius an den Radius der Kameraaufnahme 1 angepasst, so dass die Kameraaufnahme 1 drehbar in der Abdeckung 13 geführt ist. Die Abdeckung 13 kann beispielsweise aus Polycarbonat oder Acryl hergestellt sein. Weiterhin ist die Abdeckung 13 dazu ausgebildet, mit dem Grundträger 10 zusammenzuwirken, so dass eine vollständige Lagerung oder Aufnahme der Kameraaufnahme 1 gegeben ist. Dazu kann die Abdeckung 13 in ihrem Grundbereich einen Flansch aufweisen.

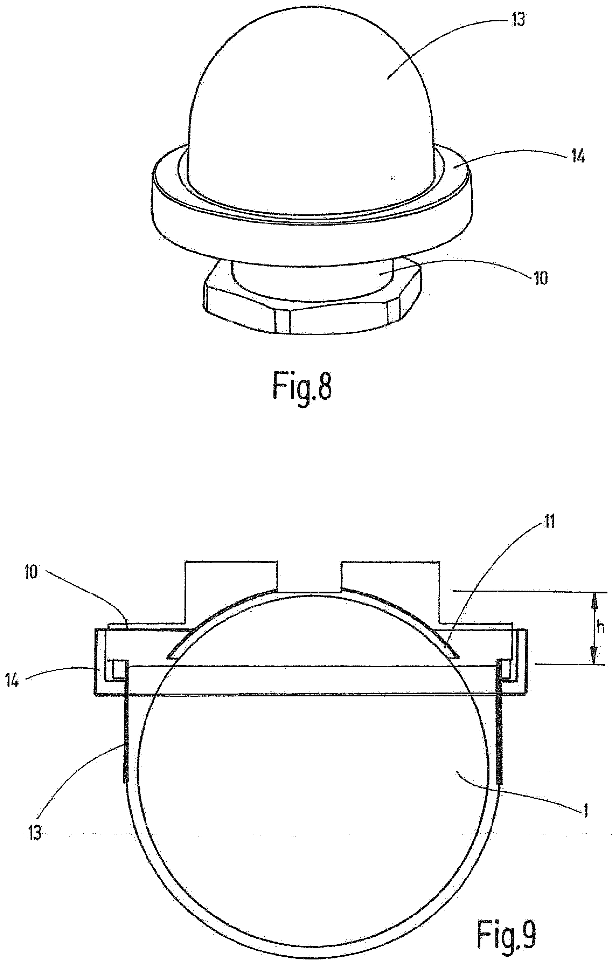

In Figur 8 ist die vollständig montierte Befestigungsvorrichtung für eine Kamera dargestellt. Die Abdeckung 13, die mit ihrem Flansch auf einem Auflagebereich des Grundträgers 10 aufliegt, ist mit einem Überwurfring 14 an dem Grundträger 10 befestigt. Dazu kann der Überwurfring 14 ein Innengewinde aufweisen, während der Grundträger 10 ein Außengewinde im Bereich der Auflagefläche aufweist. Dieser Übergang zwischen Grundträger 10, Abdeckung 13 und dem Überwurfring 14 ist durch entsprechende Toleranzen bzw. Gewinde und/oder Dichtmittel derart ausgebildet, dass eine Dichtigkeit und ein hoher Schutzgrad erreicht werden.

Da die Hüllfläche der kugelförmigen Kameraaufnahme 1 im mathematischen Sinne eine Kugel ist, deren Außendurchmesser bis auf erforderliche Toleranzen dem Innendurchmesser der Lagerfläche oder Aufnahmefläche 11 und der Abdeckung 13 entspricht, kann die Kameraaufnahme 1 prinzipiell in dem aus der Aufnahmefläche 11 bzw. dem Grundträger 10 und der Abdeckung 13 gebildeten Innenraum frei ausgerichtet werden.

Die Kameraaufnahme 1 und der Grundträger 10 sind so ausgestaltet, dass wahlweise entweder die Kameraaufnahme 1 oder der Grundträger 10 aus hartmagnetischem Material gefertigt und geeignet magnetisiert sind. Das jeweils andere Element ist aus weichmagnetischem Material gefertigt. Auf diese Weise haftet die Kameraaufnahme 1 in der jeweils eingestellten Ausrichtung in dem Grundträger 10. Dadurch ist es möglich, die Kameraaufnahme 1, das heißt damit die Blickrichtung und die Orientierung des Kamerasensors 7 bei der Installation ohne Fixierungsmaßnahmen und somit ohne die damit in bestimmten Konstellationen verbundenen Einschränkungen, beliebig auszurichten. Die endgültige Fixierung der Kameraaufnahme 1 kann durch den Anpressdruck der Abdeckung 13 erfolgen, wenn diese durch den Überwurfring 14 mit dem Grundträger 10 verbunden wird.

Darüber hinaus kann die Oberfläche der Kameraaufnahme 1 und/oder der Aufnahmefläche 11 zumindest teilweise mit einem weichen Material mit hohen Reibungskoeffizienten beschichtet sein, um einerseits die Abdeckung 13 vor Beschädigungen zu schützen und andererseits sicherzustellen, dass die einmal vorgenommene Ausrichtung der Kameraaufnahme 1 nach Fixierung auch bei Erschütterungen dauerhaft erhalten bleibt. Bei einer hartmagnetischen Ausführung der Halbkugeln 2 sowie deren geeignete Magnetisierung müssen die beiden Halbkugeln 2 nicht miteinander verschraubt oder durch andere Maßnahmen miteinander verbunden werden. Denn aufgrund der magnetischen Anziehung, vorzugsweise im Zusammenwirken mit geeigneten Rastelementen 15 (siehe Figur 1), ist eine stabile Verbindung der beiden Halbkugeln 2 zu der Kameraaufnahme 1 gegeben.

Figur 9 zeigt einen Querschnitt durch die Befestigungsvorrichtung für die Kamera. Die Kameraaufnahme 1 ist in dem Grundträger 10 angeordnet, wo sie an der Aufnahmefläche 10, die auch als Haftungsbereich bezeichnet werden kann, durch Magnetkraft befestigt ist. Zudem ist die Kameraaufnahme 1 mittels der Abdeckung 13 und dem Überwurfring 14 gesichert.

Der Grundträger 10 oder die Aufnahmefläche 10 hat eine Höhe h, die in einer Richtung senkrecht zu einer Montagefläche definiert ist. Die Kameraaufnahme 1 oder eine Hüllkugel der Kameraaufnahme 1 hat einen Radius r. Die Höhe h ist so gewählt, dass sie kleiner ist als der Radius r. In diesem Ausführungsbeispiel entspricht die Höhe h etwa einem Drittel des Radius r.

Dies ermöglicht einen sehr großen Aufnahmebereich der Kamera, da die Höhe h der Aufnahmefläche 10 oder des Grundträgers 10 einen Verdeckungsbereich der Kamera darstellt, in dem keine Aufnahmen möglich sind. Vorteilhafterweise ist dieser Verdeckungsbereich minimiert.

Ein Montage-Prozess für die gesamte Kameraaufnahme 1 an einer Aufnahme- oder Montagefläche lässt sich zum Beispiel ganz einfach wie folgt gestalten. Bohren einer kreisrunden Öffnung, zum Beispiel mit einer Lochkreissäge in die Montagefläche, wie zum Beispiel einem Fahrzeughimmel und anschließendes Einführen des Grundträgers 10 mit dem kleineren Durchmesser in die Öffnung. Dann erfolgt die Befestigung des Grundträgers 10 an der Montagefläche durch Verschrauben des Grundträgers 10 von hinten mit einer Befestigungsmutter.

Die Elektronik wird in eine Halbkugel 2 des Kamera-Kopfes eingebracht. Die Platine kann dabei in eine nicht dargestellte Nute in der Halbkugel platziert werden. Vorzugsweise bildet der Kamerasensor eine Einheit mit der Platine, so dass das Objektiv der Kamera zugleich in der Objektivöffnung platziert wird.

Nun erfolgt eine Komplettierung des Kamera-Kopfes durch Platzieren einer zweiten, um 180° gedrehten Halbkugel auf der ersten Halbkugel oder Halbschale. Eine zusätzliche Verbindung der beiden Halbschalen ist aufgrund der magnetischen Haftung der beiden Halbschalen aneinander nicht erforderlich.

Jetzt erfolgt das Verbinden des aus dem Kamera-Kopf kommenden Kabels mit einer externen Verdrahtung, das Heranführen des Kamera-Kopfes an den Grundträger, bis die magnetische Haftung den Kamera-Kopf in der Aufnahme fixiert. Eine Ausrichtung des Kamera-Kopfes entsprechend den Installationsvorgaben kann unter Überwindung der Haftreibung vorgenommen werden.

Ein Abdecken des Kamera-Kopfes durch die Polycarbonat-Abdeckung kann dann vorgenommen werden. Schließlich wird die Polycarbonat-Abdeckung durch Verschrauben der Überwurf-Mutter mit dem Grundträger befestigt. Dadurch erfolgt eine zusätzliche Fixierung des Kamera-Kopfes gegen Verdrehung in dem Grundträger.

Die Befestigungsmutter könnte auf einer Seite eine bis zum Montage-Zeitpunkt abgedeckte klebende Oberfläche aufweisen, wie zum Beispiel durch eine während der Fertigung aufgebrachte, gestanzte zweiseitig klebende Folie, so dass die Befestigungsmutter während des Verschraubens mit dem Grundträger nicht händisch oder mittels eines Werkzeugs gehalten werden muss, was sich unter den Gegebenheiten einer Montage in der Innenverkleidung eines Fahrzeugs oft als kompliziert erweist.

Der Grundträger könnte am Übergang des zylindrischen Teils mit dem kleineren Durchmesser zum zylindrischen Teil mit dem größeren Durchmesser einen geeignet gezackten, schmalen Ring aufweisen, der einer Verdrehung des Grundträgers während des Betriebes entgegenwirkt. Andererseits ist eine Verdrehung des Grundträgers gegen den Montage-Ort aufgrund des großen Durchmessers der Befestigungsöffnung und der geringen Masse des Kamera-Gehäuses insgesamt ohnehin sehr unwahrscheinlich.

Die Halbschale des Kamera-Kopfes sollte jeweils eine vertiefte und eine erhabene Stelle aufweisen, die beim Zusammenfügen zweier, gegeneinander um 180° gedrehter Halbschalen paarig ineinander greifen und das so entstehende Gehäuse des Kamera-Kopfes im Zusammenwirken mit der magnetischen Anziehung der beiden Halbschalen stabil formieren.

Bei einer Aufputz-Montage kann lediglich ein zylindrisches Abstandsstück verwendet werden, das eine hochwertige Oberfläche mit einem dem Außendurchmesser der Überwurf-Mutter entsprechenden Außendurchmesser und ein Innengewinde, in das der Grundträger eingeschraubt werden kann, umfasst. Dieses Abstandsstück könnte zur Verringerung der Anzahl verschiedener Komponenten auch als Befestigungsmutter zum Einsatz kommen.

### Bezugszeichenliste

- 1: Kameraaufnahme
- 2: erste Halbkugel
- 2a: erster Halbkugelbereich
- 2b: zweiter Halbkugelbereich
- 3: Hohlraum
- 4: Ausnehmungen
- 5: Objektivöffnung
- 6: Kabelöffnung
- 7: Kamerasensor
- 8: Objektiv
- 9: Kabel
- 10: Grundträger
- 11: Aufnahmefläche
- 12: Kabeldurchführung
- 13: Abdeckung
- 14: Überwurfring
- 15: Rastelement
- 16: Hohlschraube
- 17: Gegenstück

## Patentansprüche

1. Befestigungsvorrichtung für eine Kamera (7), mit einem Grundträger (10) mit einer kugelabschnittförmigen Aufnahmefläche (11) und einer an der Aufnahmefläche (11) anliegenden kugelförmigen Kameraaufnahme (1), wobei die Kameraaufnahme (1) einen Hohlraum (3) zur Aufnahme der Kamera (7) und eine Objektivöffnung (5) aufweist und wobei entweder die Kameraaufnahme (1) oder der Grundträger (10) ein hartmagnetisches Material aufweist, wobei das jeweils andere Element ein weichmagnetisches Material aufweist und der Hohlraum (3) in einem ersten Halbkugelbereich (2a) der Kameraaufnahme (1) angeordnet ist und wobei in einem zweiten Halbkugelbereich (2b) der Kameraaufnahme (1) konzentrische Ausnehmungen (4) für Kabel (9) der Kamera (7) vorgesehen sind, wobei die Ausnehmungen (4) sich ausgehend von dem ersten Halbkugelbereich (2a) bis zu einem Pol der Kameraaufnahme (1) erstrecken.

2. Befestigungsvorrichtung nach Anspruch 1, wobei eine Höhe (h) der kugelabschnittförmigen Aufnahmefläche (11) kleiner ist als ein Radius (r) der Kameraaufnahme (1).

3. Befestigungsvorrichtung nach Anspruch 1 oder 2, wobei an dem Grundträger (10) eine transparente, kugelsegmentförmige Abdeckung (13) zur teilweisen Aufnahme der Kameraaufnahme (1) vorgesehen ist.

4. Befestigungsvorrichtung nach Anspruch 3, wobei die Abdeckung (13) mit einem Überwurfring (14) an dem Grundträger (10) befestigt ist.

5. Befestigungsvorrichtung nach einem der vorhergehenden Ansprüche, wobei die Aufnahmefläche (11) eine reibungserhöhende Oberfläche aufweist.

6. Befestigungsvorrichtung nach einem der vorhergehenden Ansprüche, wobei die Kameraaufnahme (1) aus zwei verbindbaren Halbkugeln (2) besteht.

7. Befestigungsvorrichtung nach Anspruch 6, wobei die zwei Halbkugeln (2) identisch ausgestaltet und magnetisiert sind.

8. Befestigungsvorrichtung nach einem der vorhergehenden Ansprüche, wobei ein Kabelaustrittsbereich (6) für die Kamera (7) in der räumlichen Mitte der kugelförmigen Kameraaufnahme (1) angeordnet ist.

9. Kamera mit einem Objektiv, **gekennzeichnet durch** eine Befestigungsvorrichtung nach einem der Ansprüche 1 bis 8.

## Claims

1. An attaching device for a camera (7) comprising a base support (10) with a spherical section-shaped holding surface (11) and, resting on the holding surface (11), a spherical camera holder (1), wherein the camera holder (1) has a hollow chamber (3) for holding the camera (7) and a lens opening (5), and wherein either the camera holder (1) or the base support (10) includes a hard magnetic material, wherein the respective other element includes a soft magnetic material and the hollow chamber (3) is arranged in a first semi-spherical area (2a) of the camera holder (1), and wherein, in a second semi-spherical area (2b) of the camera holder (1), concentric recesses (4) are provided for cables (9) of the camera (7), wherein the recesses (4) extend from the first semi-spherical area (2a) to a pole of the camera holder (1).

2. The attaching device according to claim 1, wherein a height (h) of the spherical section-shaped holding surface (11) is less than a radius (r) of the camera holder (1).

3. The attaching device according to claim 1 or 2, wherein, on the base support (10), a transparent, spherical segment-shaped cover (13) is provided for partially holding the camera holder (1).

4. The attaching device according to claim 3, wherein the cover (13) is attached to the base support (10) by means of a retaining ring (14).

5. The attaching device according to any one of the preceding claims, wherein the holding surface (11) has a friction-increasing surface.

6. The attaching device according to any one of the preceding claims, wherein the camera holder (1) consists of two connectable semi-spheres (2).

7. The attaching device according to claim 6, wherein the two semi-spheres (2) have an identical shape and magnetisation.

8. The attaching device according to any one of the preceding claims, wherein a cable exit area (6) for the camera (7) is arranged in the spatial centre of the spherical camera holder (1).

9. A camera with a lens, **characterized by** an attaching device according to any one of claims 1 to 8.

## Revendications

1. Dispositif de fixation d'une caméra (7), comprenant un support de base (10) avec une surface de réception (11) en forme de segment de sphère et un logement de caméra (1) sphérique posé sur la surface de réception (11), où le logement de caméra (1) présente une cavité (3) pour la réception de la caméra (7) et une ouverture d'objectif (5), où soit le logement de caméra (1) soit le support de base (10) comprend un matériau magnétique dur, l'autre élément respectif comprenant un matériau magnétique doux, où la cavité (3) est ménagée dans une première zone hémisphérique (2a) du logement de caméra (1) et où des évidements (4) concentriques pour des câbles (9) de la caméra (7) sont prévus dans une deuxième zone hémisphérique (2b) du logement de caméra (1), les évidements (4) s'étendant de la première zone hémisphérique (2a) jusqu'à un pôle du logement de caméra (1).

2. Dispositif de fixation selon la revendication 1, où la hauteur (h) de la surface de réception (11) en forme de segment de sphère est inférieure au rayon (r) du logement de caméra (1).

3. Dispositif de fixation selon la revendication 1 ou 2, où un couvercle (13) transparent en forme de calotte sphérique est prévu sur le support de base (10) pour la réception partielle du logement de caméra (1).

4. Dispositif de fixation selon la revendication 3, où le couvercle (13) est fixé par un écrou-chapeau (14) sur le support de base (10).

5. Dispositif de fixation selon l'une des revendications précédentes, où la surface de réception (11) présente une surface d'accroissement de friction.

6. Dispositif de fixation selon l'une des revendications précédentes, où le logement de caméra (1) se compose de deux hémisphères (2) pouvant être assemblées.

7. Dispositif de fixation selon la revendication 6, où les deux hémisphères (2) ont une forme et une magnétisation identiques.

8. Dispositif de fixation selon l'une des revendications précédentes, où une zone de sortie de câble (6) pour la caméra (7) est située au centre spatial du logement de caméra (1) sphérique.

9. Caméra pourvue d'un objectif, **caractérisée par** un dispositif de fixation selon l'une des revendications 1 à 8.
